(19) Europäisches Patentamt
European Patent Office
Office européen des brevets

(11) Veröffentlichungsnummer: **0 113 642**
**B1**

(12) **EUROPÄISCHE PATENTSCHRIFT**

(45) Veröffentlichungstag der Patentschrift: **26.11.86**

(51) Int. Cl.⁴: **B 65 D 41/32**

(21) Anmeldenummer: **83810623.5**

(22) Anmeldetag: **28.12.83**

(54) **Verschlusskappe für einen Behälter und Vorrichtung zur Herstellung derselben.**

(30) Priorität: **07.01.83 CH 84/83**

(43) Veröffentlichungstag der Anmeldung:
**18.07.84 Patentblatt 84/29**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**EP-A-0 034 997**
**FR-A-2 282 378**
**FR-A-2 395 909**
**FR-A-2 439 138**

(73) Patentinhaber: **Crown Obrist AG, Römerstrasse 83, CH-4153 Reinach (CH)**

(72) Erfinder: **Breuer, Hans-Werner, Seewenstrasse 304, CH-4249 Himmelried (CH)**

(74) Vertreter: **Wenger, René, Hepp & Partner AG Marktgasse 18, CH-9500 Wil (CH)**

**EP 0 113 642 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft eine Verschlusskappe für einen Behälter gemäss dem Oberbegriff von Patentanspruch 1 sowie eine Vorrichtung zum Herstellen einer Kunststoff-Verschlusskappe gemäss dem Oberbegriff von Patentanspruch 5.

Eine Verschlusskappe der genannten Art ist beispielsweise in der EP-A-34997 der Anmelderin beschrieben. Gemäss dieser Druckschrift weist das Garantieband auf der Innenseite eine sehnenartige Verstärkung auf, die den Zweck hat, das Fliessverhalten der thermoplastischen Masse beim Spritzvorgang zu verbessern. Ausserdem soll dadurch das Anschrumpfen des Garantiebands an den Behälterhals mittels Wärmeeinwirkung erleichtert werden.

Es hat sich nun herausgestellt, dass die Verstärkung auf der Innenseite des Garantiebandes nur in einem beschränkten Rahmen dimensioniert werden kann, da die Abmessungen und die Konfiguration des Behälterhalses dabei berücksichtigt werden müssen. Ausserdem sind beim Entformen der Verschlusskappe in einem axial öffnenden Werkzeug nach wie vor Probleme aufgetreten, welche jedoch nicht in direktem Zusammenhang mit der Verstärkung am Garantieband stehen. Beim Abstreifen der Verschlusskappe vom inneren Werkzeugteil treten nämlich am Garantieband Kräfte auf, welche entgegengesetzt zur Ausstossrichtung wirken und welche das Garantieband nach unten ziehen. Dadurch treten an den Sollbruch-Verbindungsstegen unerwünschte Dehnungen auf, da das Thermoplast unmittelbar nach dem Spritzvorgang noch relativ warm und dehnbar ist. Insbesondere im Bereich zwischen zwei Sollbruch-Verbindungsstegen kann das Garantieband beim Entformen derart deformiert werden, dass es nicht mehr bestimmungsgemäss mit dem Behälterhals in Eingriff gebracht werden kann.

Es ist daher Aufgabe der Erfindung, eine Verschlusskappe der eingangs genannten Art zu schaffen, bei der die Materialverdickung am Garantieband besser den Anforderungen gemäss dimensioniert werden kann und bei der zusätzlich die Entformung aus dem Spritzgusswerkzeug ohne Beschädigung oder Deformation des Garantiebandes erfolgen kann. Diese Aufgabe wird erfindungsgemäss mit einer Schraubkappe gelöst, welche die Merkmale von Patentanspruch 1 aufweist.

Durch die Anordnung der Materialverstärkung auf der Aussenseite des Garantiebandes kann die Verstärkung erforderlichenfalls grösser dimensioniert werden als dies bei einer Verstärkung auf der Innenseite des Garantiebandes möglich wäre. Wie nachstehend noch im Detail erläutert wird, dient die Materialverstärkung auch als Abstreifhilfe im Spritzgusswerkzeug, indem das Garantieband selbst durch die Materialverstärkung bei einer Relativbewegung des Innendorns im Werkzeug festgehalten wird. Durch die Vergrösserung des Querschnitts der Materialverstärkung gegen den unteren Rand des Garantiebands wird erreicht, dass das Garantieband beim Abstreifen vom Innendorn sich am Werkzeug abstützt, dass jedoch das Auswerfen der Verschlusskappe in entgegengesetzter Richtung trotzdem nicht unnötig erschwert wird.

Gute Eigenschaften im Hinblick auf die Schrumpffähigkeit des Garantiebandes und die Fliesseigenschaften der Spritzgussmasse werden erreicht, wenn die Verstärkung einen etwa rechteckigen Grundriss aufweist und sich über einen Sektor erstreckt, der gleich oder kleiner ist als die Hälfte des Sektors zwischen zwei Sollbruch-Verbindungsstegen. In bestimmten Anwendungsfällen kann es auch vorteilhaft sein, wenn die Verstärkung einen etwa dreieckigen Grundriss hat, wobei eine Seite des Dreiecks etwa parallel verläuft mit der Unterkante des Garantiebands.

Eine weitere Aufgabe der Erfindung besteht darin, eine Vorrichtung zum Herstellen einer Verschlusskappe der eingangs genannten Art zu schaffen, welche einfach in der Herstellung ist und bei hohen Ausstossleistungen fehlerfreie Verschlusskappen produziert. Diese Aufgabe wird mit eine Vorrichtung gelöst, welche die Merkmale von Patentanspruch 5 aufweist. Die Materialausnehmungen lassen sich relativ leicht an bereits bestehenden Spritzgusswerkzeugen anbringen, so dass sich durch eine relativ einfache Massnahme überraschende Verbesserungen sowohl am Spritzgiesswerkzeug selbst als auch an der Verschlusskappe erzielen lassen.

Ausführungsbeispiele der Erfindung sind in den Zeichnungen dargestellt und werden nachstehend genauer beschrieben. Es zeigen:

Figur 1 einen Teilquerschnitt durch eine erfindungsgemässe Verschlusskappe in zehnfacher Vergrösserung,

Figur 2 eine Teilansicht von unten auf die Verschlusskappe gemäss Figur 1,

Figur 3 eine Seitenansicht einer Verstärkung am Garantieband,

Figur 4 ein abgewandeltes Ausführungsbeispiel einer Verstärkung am Garantieband,

Figur 5 die Verschlusskappe gemäss Figur 1 im geschlossenen Spritzgusswerkzeug, und

Figuren 6 bis 11 die Vorgänge beim Ausstossen einer gespritzten Verschlusskappe aus dem Werkzeug in stark verkleinertem Maßstab.

Wie in Figur 1 dargestellt, hat eine Verschlusskappe 1 wie an sich bekannt ein Garantieband 2, welches über Sollbruch-Verbindungsstege 3 einstückig mit dem unteren Rand 4 der Verschlusskappe verbunden ist. Die dargestellte Verschlusskappe hat im übrigen ein Innengewinde 7 zum Aufschrauben auf eine Behältermündung mit Aussengewinde sowie eine Dichtlippe 8 und eine Innendichtung 9. Selbstverständlich kann die Verschlusskappe auch eine andere Konfiguration aufweisen.

Es ist bereits bekannt, den Querschnitt des Garantiebandes unter einem Winkel α keilförmig auszubilden, weil dadurch axial öffnende Werkzeuge verwendet werden können. Das Garantieband 2 ist dazu bestimmt, mit einem Wulst am Behälterhals in Eingriff gebracht zu werden, so dass bei einem Aufschrauben der Verschlusskappe 1 die Sollbruch-Verbindungsstege 3 reissen und dadurch ein erstmaliges Öffnen der Verschlusskappe angezeigt wird. Bei einer Verschlusskappe gemäss dem dargestellten Ausführungsbeispiel wird das Garantieband durch Wärmeeinwirkung an den Behälterhals angeschrumpft. Die Konfiguration des Garantiebandes kann jedoch auch derart abgeändert werden, dass es ohne Wärmeeinwirkung beim Aufschrauben der Verschlusskappe auf den Behälter am Behälterhals einrastet.

Die Konfiguration der Verstärkung 5 auf der Aussenseite 6 des Garantiebandes ist aus den Figuren 1, 2 und 3 ersichtlich. Der Querschnitt der Verstärkung nimmt gegen den unteren Rand 10 des Garantiebandes wulstartig zu und hat eine unten abgerundete Keilform, wobei wie dargestellt der Keilwinkel β der Verstärkung 5 wesentlich grösser ist als der Keilwinkel α des Garantiebandes 2. Die mit der Verstärkung 5 zusätzlich erzielte abstützende Wirkung im Spritzgusswerkzeug ist aus Figur 2 besonders deutlich ersichtlich. Von unten gesehen erscheinen die Verstärkungen 5 als segmentartige Vorsprünge, die sich am Werkzeug abstützen können, wie dies insbesondere aus Figur 5 ersichtlich ist.

Der Grundriss der Verstärkung kann rechteckig sein oder auch etwa dreieckig, wie in Figur 4 dargestellt. Die Dreiecke können dabei so ausgebildet sein, dass sich ihre Spitzen unterhalb der Sollbruchverbindungsstege 3 beinahe berühren. Die Verstärkungen mit rechteckigem Grundriss erstrecken sich vorteilhaft über einen Sektor A, der gleich oder kleiner ist als die Hälfte des Sektors B zwischen zwei Sollbruch-Verbindungsstegen 3.

Figur 5 zeigt die Trennungsebenen der verschiedenen Werkzeugteile im Bereich des Garantiebands. Das obere Werkzeugteil 11 definiert die Aussenkontur der Verschlusskappe 1. Das untere Werkzeugteil 12 bildet die Unterkante 4 der Verschlusskappe und die Aussenseite 6 des Garantiebands 2. Das untere Werkzeugteil 12 hat dabei eine Innenwand 17, welche sich unter dem Keilwinkel des Garantiebandes konisch nach unten erweitert. Die Trennungsebene 13 zwischen dem oberen Werkzeugteil 11 und dem unteren Werkzeugteil 12 liegt auf der Ebene der unteren Kante 4 der Verschlusskappe 1. Die Innenkontur der Verschlusskappe wird durch ein inneres Werkzeugteil 14 gebildet, welches auch die Innenseite 15 des Garantiebands und den unteren Rand 10 des Garantiebands definiert. Beim Abstreifen der Verschlusskappe 1 vom inneren Werkzeugteil 14 mit Hilfe des unteren Werkzeugteils 12 wird die Verschlusskappe selbst am unteren Rand 4 abgestützt. Das Garantieband 2 seinerseits wird separat abgestützt durch die Verstärkungen 5, welche durch Materialausnehmungen 16 im unteren Werkzeugteil 12 gebildet sind. Die infolge Haftreibung beim öffnen der Werkzeugteile entstehenden Kräfte am Garantieband können dadurch nicht mehr dazu führen, dass die Sollbruch-Verbindungsstege 3 gedehnt werden oder dass das Garantieband 2 deformiert wird. Beim Einspritzen der Gussmasse, welche das Garantieband über die Sollbruch-Verbindungsstege 3 erreicht, bewirken die Verstärkungen 5 ein homogenes Ineinanderfliessen der Gussmasse im Bereich zwischen zwei Sollbruch-Verbindungsstegen.

Die Figuren 6 bis 11 zeigen die einzelnen Relativpositionen der Werkzeugteile beim Entformen der gespritzten Verschlusskappe. Einzelheiten eines derartigen Spritzgusswerkzeuges sind dem Fachmann bekannt und werden daher hier nicht näher erläutert. Die Bewegungen der einzelnen Werkzeugteile werden mit einem hydraulischen Stufenausstosser 18 bewirkt.

In Figur 6 sind alle Werkzeugteile geschlossen, so dass diese die gleiche Position einnehmen wie in Figur 5 dargestellt. Wie Figur 7 zeigt, wird zuerst das obere Werkzeugteil 11 angehoben, so dass die Aussenseite der Verschlusskappe 1 freigelegt wird. Bei diesem Vorgang wird die Verschlusskappe vom inneren Werkzeugteil 14 festgehalten. Das innere Werkzeugteil 14 besteht an sich aus mehreren konzentrisch ineinander geschobenen Teilen, wie dies besonders deutlich aus Figur 8 ersichtlich ist. Dies ist erforderlich, um die komplizierte Innenkontur der Verschlusskappe entformen zu können. Wie Figur 8 zeigt, wird zuerst das untere Werkzeugteil 12 zusammen mit dem inneren Werkzeugteil 14 etwas angehoben, so dass die Innendichtung in der Verschlusskappe 1 freigestellt wird. Bei dieser Bewegung ist das Garantieband 2 nach wie vor fest von Werkzeugteilen umschlossen.

Figur 9 zeigt die entscheidende Entformungsphase, bei der das Garantieband entformt wird. Das obere Werkzeugteil 12 wird weiter angehoben, so dass die Verschlusskappe zusammen mit dem Garantieband vom inneren Werkzeugteil 14 abgestreift wird. Dabei ist das Garantieband wie in Figur 5 dargestellt an den Verstärkungen bzw. an den Materialausnehmungen abgestützt. Nach Vollendung dieser Phase ist die Verschlusskappe 1 nur noch durch das untere Werkzeugteil 12 gehalten.

Um die Verschlusskappe ganz aus dem Werkzeug zu entfernen, wird ein Stössel 19 ausgefahren, der die Verschlusskappe auswirft, wie dies in Figur 10 dargestellt ist. Der Stössel 19 wird vorzugsweise pneumatisch betätigt. Nach dem Ausstossen der Verschlusskappe bewegen sich die einzelnen Werkzeugteile wieder in ihre ursprüngliche Lage zurück, so dass die Form für einen weiteren Einspritzvorgang geschlossen werden kann. Figur 11 zeigt das Werkzeug, bei dem nur noch das obere Werkzeugteil 11 geschlossen werden muss.

**Patentansprüche**

1. Verschlusskappe für einen Behälter, die mit einem Garantieband (2) versehen und einstückig mit dem Garantieband aus thermoplastischem Material im Spritzgussverfahren hergestellt ist, wobei das Garantieband über eine Mehrzahl von Sollbruch-Verbindungsstegen (3) mit dem unteren Rand (4) der Verschlusskappe verbunden ist, und das dazu bestimmt ist, den Behälterhals wenigstens teilweise zu umgeben und mit diesem durch Warmverformung in Eingriff bringbar ist, und wobei die Wandstärke des Garantiebands im Bereich zwischen je zwei Sollbruch-Verbindungsstegen eine Verstärkung (5) aufweist und die einzelnen Verstärkungen durch Abschnitte geringerer Wandstärke unterbrochen sind, dadurch gekennzeichnet, dass die Verstärkung (5) auf der Aussenseite (6) des Garantiebands (2) angeordnet ist und sich gegen den unteren Rand des Garantiebands hin vergrössert.

2. Verschlusskappe nach Anspruch 1, dadurch gekennzeichnet, dass die Verstärkung einen etwa rechteckigen Grundriss aufweist.

3. Verschlusskappe nach Anspruch 2, dadurch gekennzeichnet, dass sich die Verstärkung am Garantieband über einen Sektor (A) erstreckt, der gleich oder kleiner ist als die Hälfte des Sektors (B) zwischen zwei Sollbruch-Verbindungsstegen (3).

4. Verschlusskappe nach Anspruch 1, dadurch gekennzeichnet, dass die Verstärkung einen etwa dreieckigen Grundriss hat, wobei eine Seite des Dreiecks etwa parallel verläuft mit der Unterkante des Garantiebands.

5. Vorrichtung zum Herstellen einer Kunststoff-Verschlusskappe, insbesondere nach Anspruch 1 im Spritzverfahren, wobei die Verschlusskappe ein Garantieband aufweist, das über eine Mehrzahl von Sollbruch-Verbindungsstegen mit dem unteren Rand der Verschlusskappe verbunden ist, und das mit einer Behältermündung durch Warmverformung in Eingriff bringbar ist, bestehend aus einem oberen Werkzeugteil (11) zur Bildung der Aussenkontur der Verschlusskappe, aus einem unteren Werkzeugteil (12) zur Bildung der Unterkante der Verschlusskappe und der Aussenseite des Garantiebandes, wobei die Berührungsebene des oberen und des unteren Werkzeugteils in der Ebene der Unterkante der Verschlusskappe verläuft, sowie bestehend aus einem inneren Werkzeugteil (14) zur Bildung der Innenkontur der Verschlusskappe sowie der Innenseite und der Unterkante des Garantiebands, dadurch gekennzeichnet, dass am unteren Werkzeugteil (12) an dem die Aussenseite (6) des Garantiebandes bildenden Wandabschnitt Materialausnehmungen (16) angeordnet sind, von denen jeweils eine zwischen zwei Sollbruch-Verbindungsstegen (3) liegt.

6. Vorrichtung nach Anspruch 5, dadurch gekennzeichnet, dass sich die Materialausnehmungen (16) gegen den unteren Rand des Garantiebandes hin vergrössern.

**Claims**

1. A closure cap for a container, which is provided with a guarantee strip (2) and which is produced in one piece with the guarantee strip from thermoplastic material by an injection moulding process, wherein the guarantee strip is connected to the lower edge (4) of the closure cap by way of a plurality of desired-rupture connecting web portions (3), and is intended at least partially to surround the neck of the container and can be brought into engagement therewith by hot shaping, and wherein the wall thickness of the guarantee strip has a respective reinforcement (5) in the region between each two desired-rupture connecting web portions and the individual reinforcements are interrupted by portions of smaller wall thickness, characterised in that the reinforcement (5) is arranged on the outward side (6) of the guarantee strip (2) and increases in size towards the lower edge of the guarantee strip.

2. A closure cap according to claim 1 characterised in that the reinforcement is of substantially rectangular configuration in plan.

3. A closure cap according to claim 2 characterised in that the reinforcement extends on the guarantee strip over a sector (A) which is equal to or smaller than half of the sector (B) between two desired-rupture connecting web portions (3).

4. A closure cap according to claim 1 characterised in that the reinforcement is of substantially triangular configuration in plan, one side of the triangle extending substantially parallel to the lower edge of the guarantee strip.

5. Apparatus for producing a plastics closure cap, in particular according to claim 1, by an injection process, wherein the closure cap has a guarantee strip which is connected to the lower edge of the closure cap by way of a plurality of desired-rupture connecting web portions and can be brought into engagement with a container mouth by hot shaping, comprising an upper tool portion (11) for forming the outside contour of the closure cap, a lower tool portion (12) for forming the lower edge of the closure cap and the outward side of the guarantee strip, wherein the plane of contact between the upper and lower tool portions is disposed in the plane of the lower edge of the closure cap, and an inner tool portion (14) for forming the inside contour of the closure cap and the inward side and the lower edge of the guarantee strip, characterised in that arranged on the lower tool portion (12) at the wall portion forming the outward side (6) of the guarantee strip are recesses (16), each of which lies between two desired-rupture connecting web portions (3).

6. Apparatus according to claim 5 characterised in that the recesses (16) increase in size towards the lower edge of the guarantee strip.

**Revendications**

1. Capuchon de fermeture pour un récipient, pourvu d'une bande de garantie (2) et fabriqué d'une seule piéce avec la bande de garantie à partir d'une matière thermoplastique par un procédé de moulage par injection, la bande de garantie étant reliée au bord inférieur (4) du capuchon de fermeture par l'intermédiaire de plusieurs barrettes de liaison destinées à être rompues (3) et étant conçue pour entourer le col du récipient au moins en partie et pour être amenée en prise avec celui-ci par formage à chaud, tandis que l'épaisseur de paroi de la bande de garantie présente, dans chacune des zones situées entre deux barrettes de liaison destinées à être rompues, un renforcement (5), les différents renforcements étant séparés par des portions ayant une épaisseur de paroi plus faible, caractérisé en ce que le renforcement (5) est disposé sur la face externe (6) de la bande de garantie (2) et s'élargit en descendant vers le bord inférieur de la bande de garantie.

2. Capuchon de fermeture selon la revendication 1, caractérisé en ce que le renforcement présente, vu en projection horizontale, une forme approximativement rectangulaire.

3. Capuchon de fermeture selon la revendication 2, caractérisé en ce que le renforcement prévu sur la bande de garantie s'étend sur un secteur (A) égal ou inférieur à la moitié du secteur (B) qui sépare deux barrettes de liaison destinees à être rompues (3).

4. Capuchon de fermeture selon la revendication 1, caractérisé en ce que le renforcement présente, vu en projection horizontale, une forme approximativement triangulaire, un côté du triangle étant sensiblement parallèle au bord inférieur de la bande de garantie.

5. Dispositif pour la fabrication d'un capuchon de fermeture en matière plastique, notamment selon la revendication 1, par un procédé de moulage par injection, le capuchon de fermeture présentant une bande de garantie qui est reliée au bord inférieur du capuchon de fermeture, par l'intermédiaire de plusieurs barrettes de liaison destinées à être rompues, et qui peut être amenée en prise avec une embouchure du récipient par formage à chaud, ce dispositif comprenant un élément de moule supérieur (11) pour former le contour externe du capuchon de fermeture, un élément de moule inférieur (12) pour former le bord inférieur du capuchon de fermeture et la face externe de la bande de garantie, le plan de contact des éléments de moule supérieur et inférieur étant situé dans le plan du bord inférieur du capuchon de fermeture et également un élément de moule interne (14) pour former le contour interne du capuchon de fermeture ainsi que la face interne et le bord inférieur de la bande de garantie, caractérisé en ce que, sur l'élément de moule inférieur (12), et au niveau de la portion de paroi formant la face externe (6) de la bande de garantie, sont disposés des évidements (16) de réception de matière, dont chacun se trouve entre deux barrettes de liaison destinées à être rompues (3).

6. Dispositif selon la revendication 5, caractérisé en ce que les évidements (16) s'élargissent en descendant vers le bord inférieur de la bande de garantie.

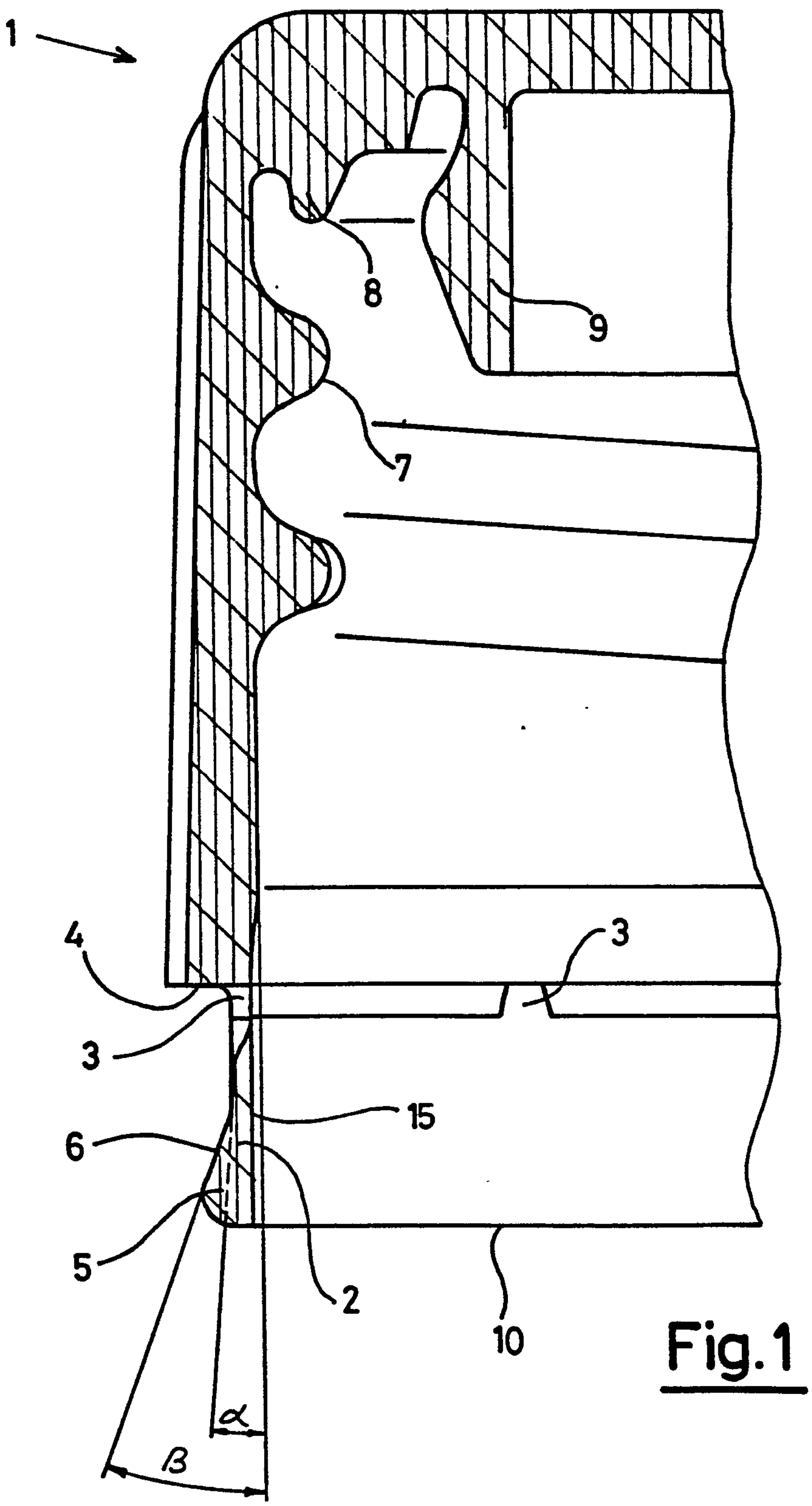


Fig.1

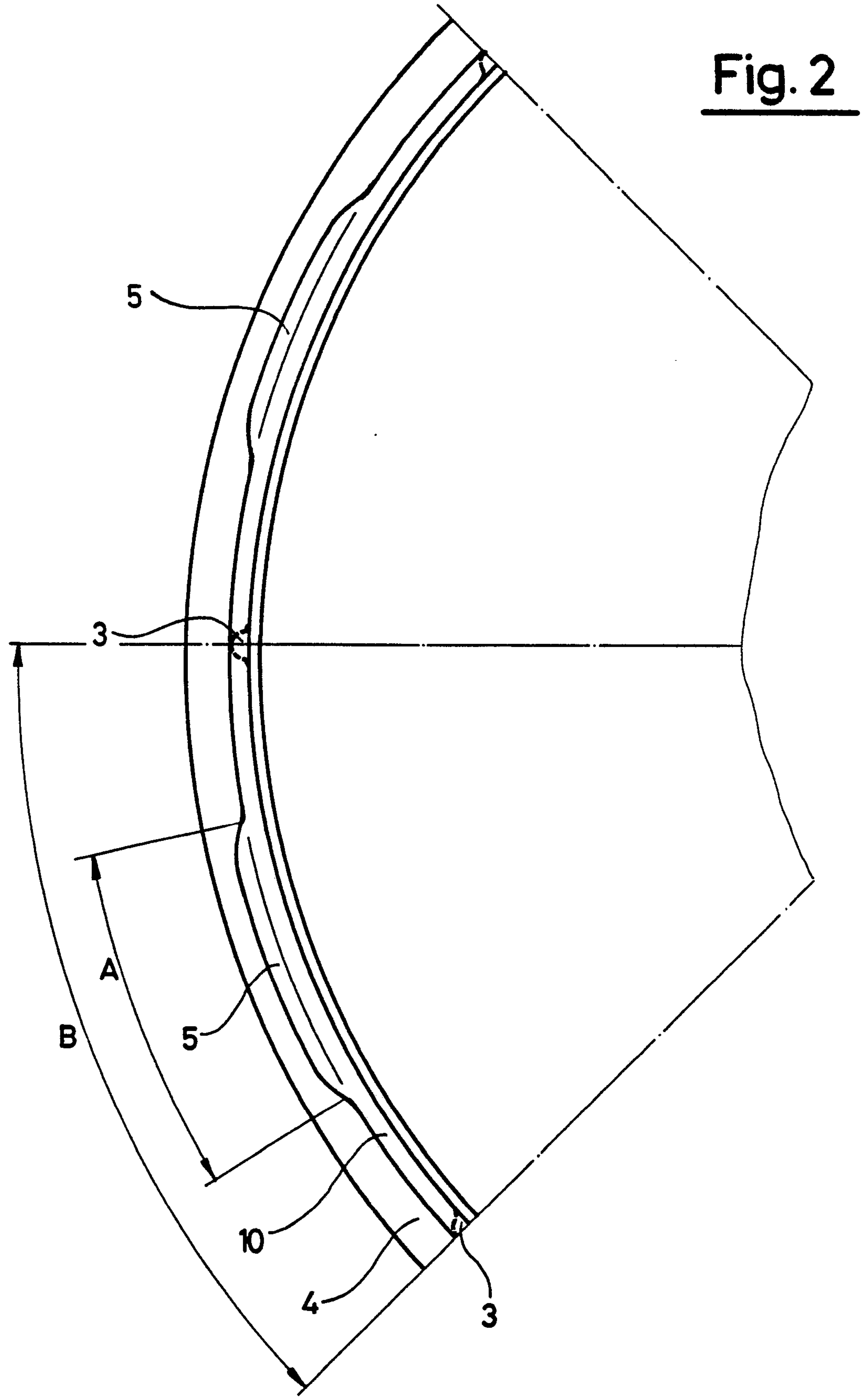


Fig. 2

Fig. 3

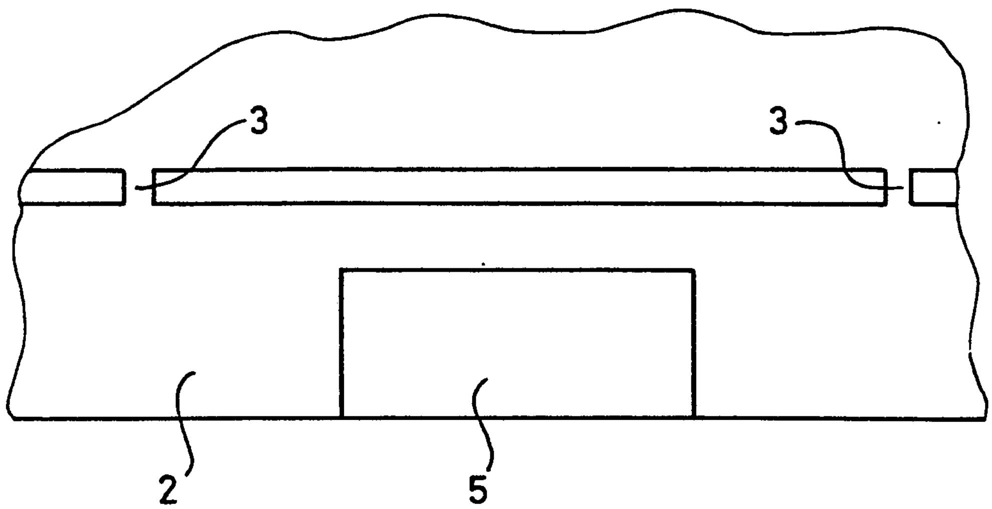


Fig. 4

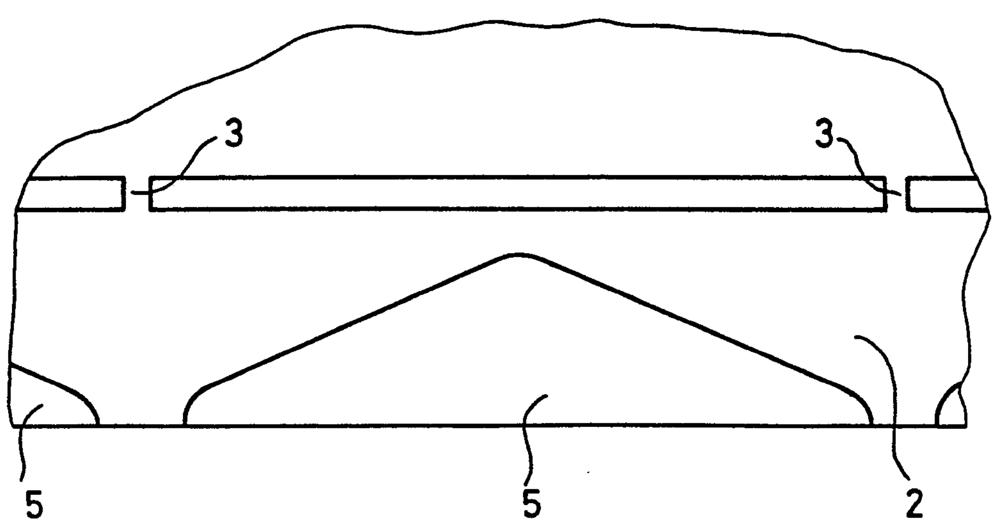

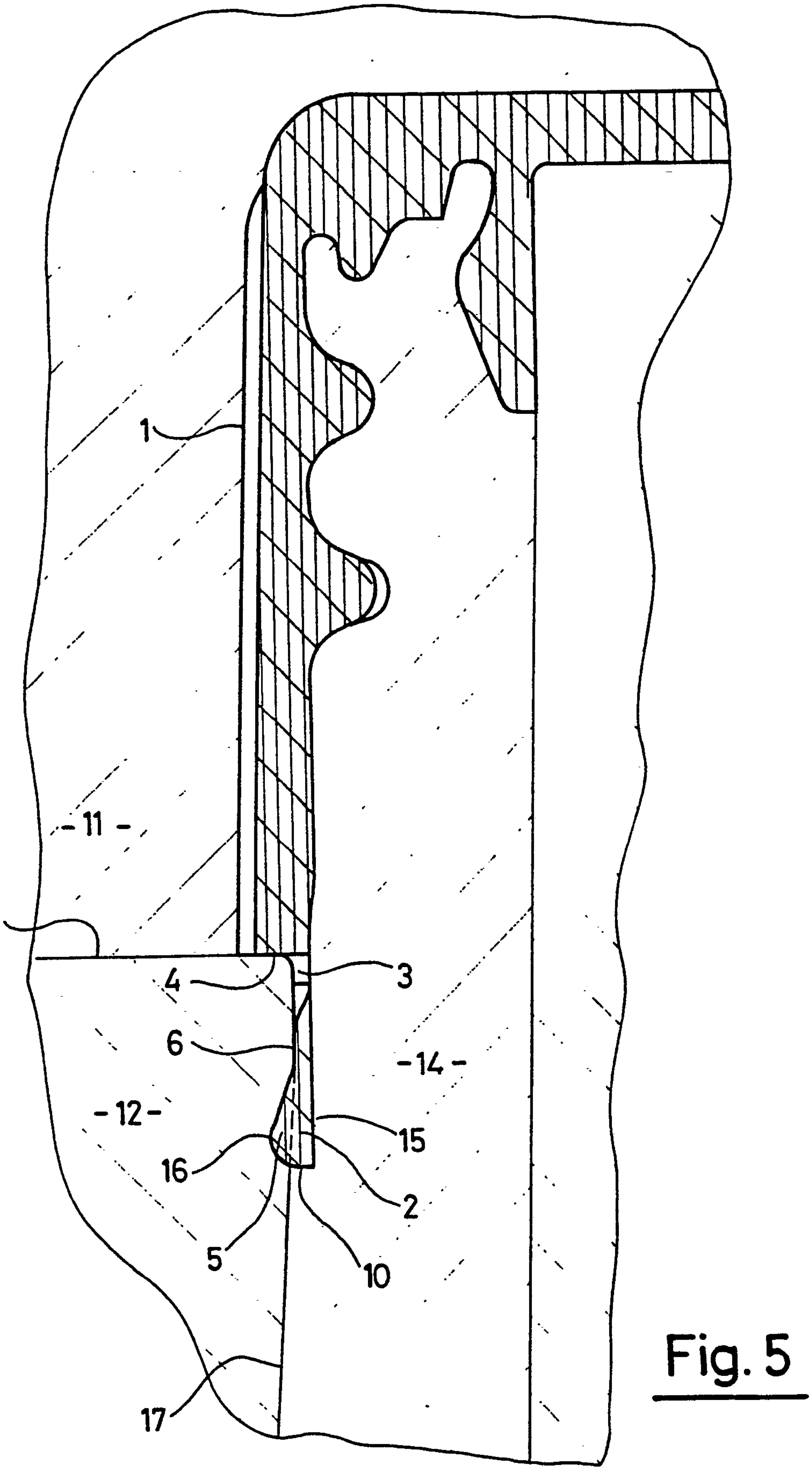


Fig. 5

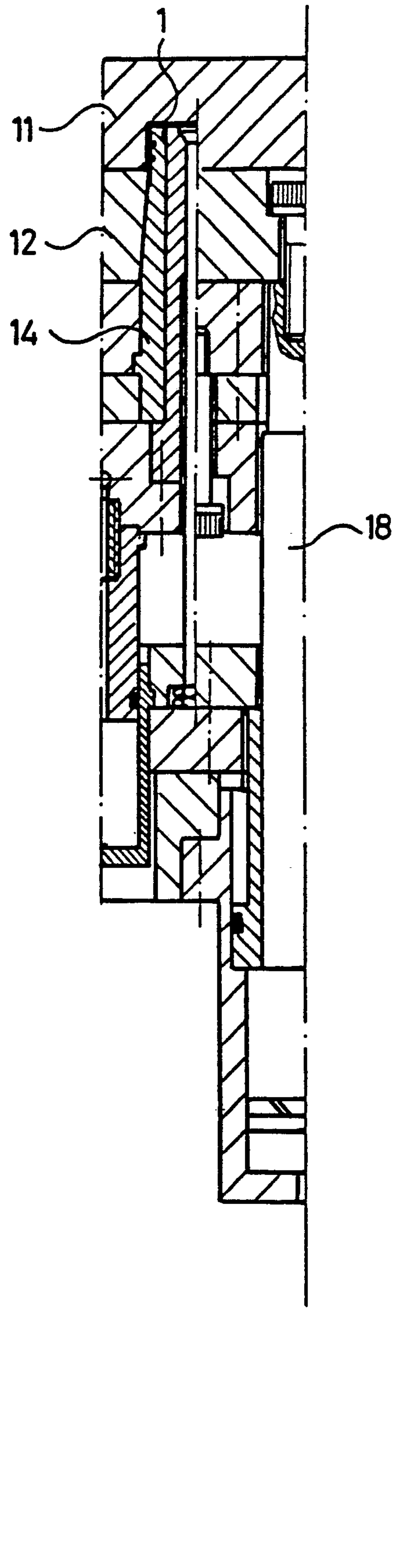


Fig. 6

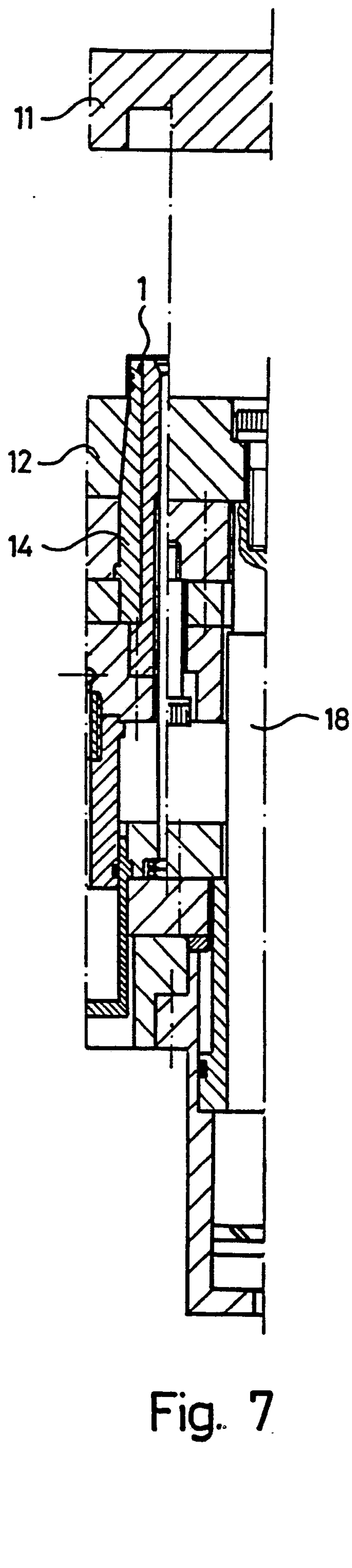


Fig. 7

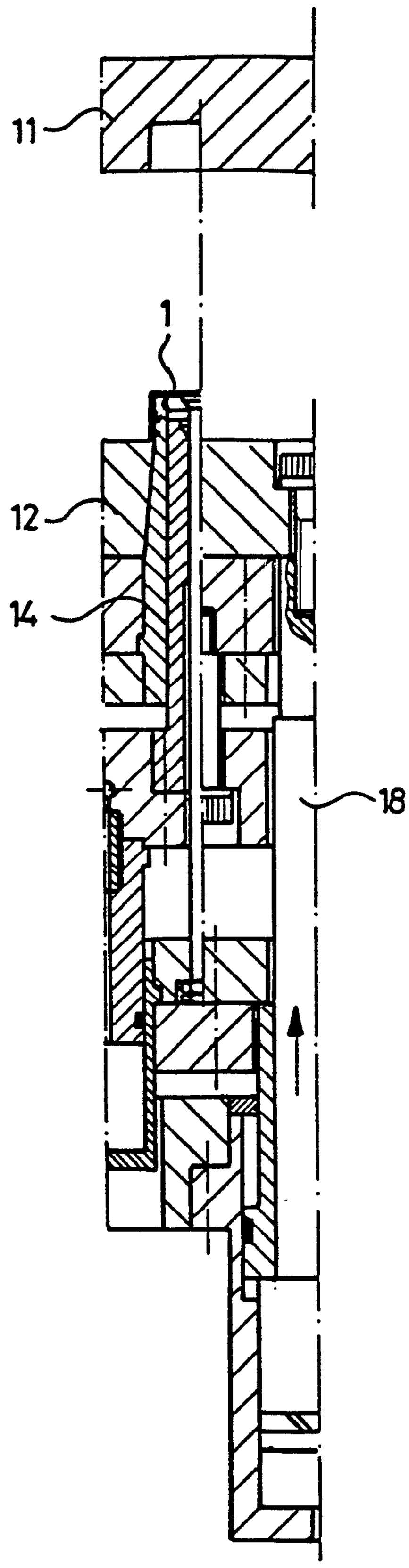


Fig. 8

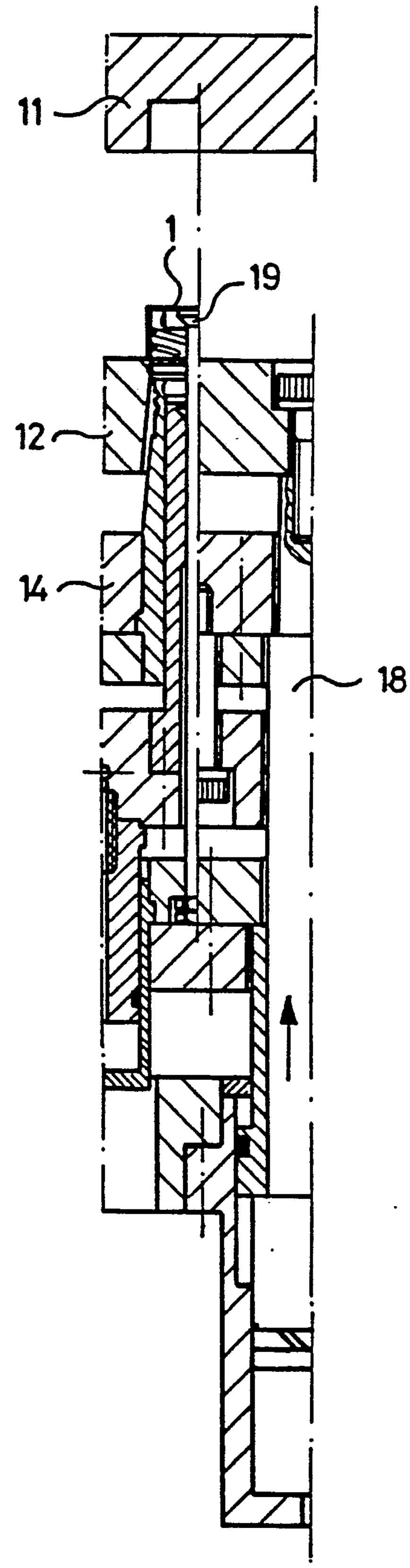


Fig. 9

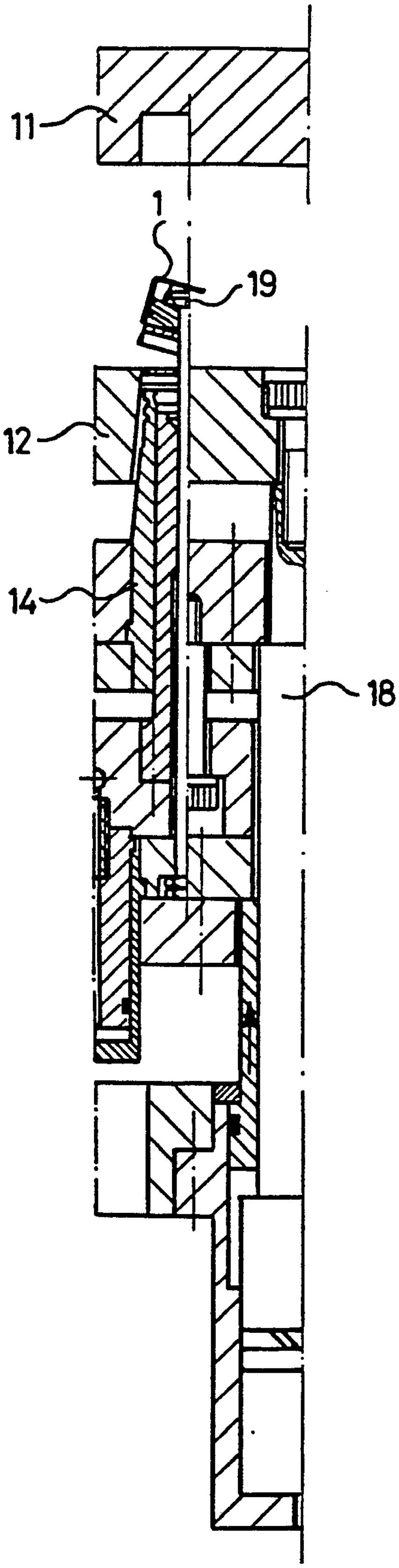


Fig. 10

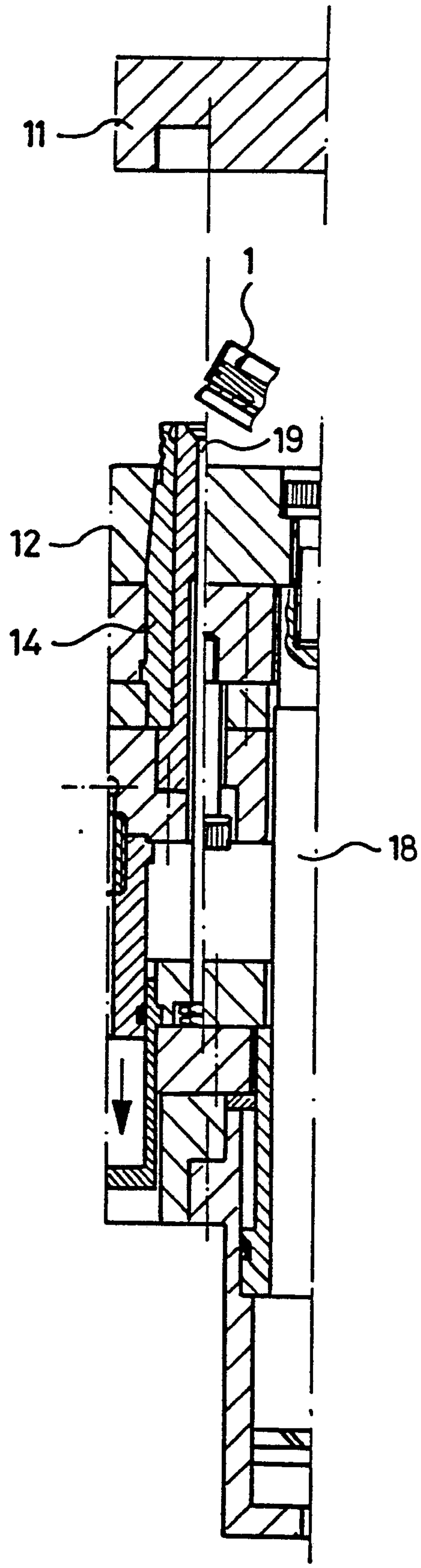


Fig. 11